(19) Europäisches Patentamt
European Patent Office
Office européen des brevets

(11) **EP 4 134 560 A1**

(12) **EUROPÄISCHE PATENTANMELDUNG**

(43) Veröffentlichungstag:
**15.02.2023   Patentblatt 2023/07**

(21) Anmeldenummer: **22190386.7**

(22) Anmeldetag: **22.11.2019**

(51) Internationale Patentklassifikation (IPC):
**F16C 17/10** (1968.09)     **F01D 25/16** (1968.09)
**F16C 27/02** (1968.09)

(52) Gemeinsame Patentklassifikation (CPC):
**F16C 17/105; F01D 25/166; F01D 25/186;**
**F16C 17/10; F16C 33/1045;** F05D 2220/40;
F16C 3/02; F16C 17/18; F16C 33/106;
F16C 33/1065; F16C 2360/24

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **03.12.2018   DE 102018130709**

(62) Dokumentnummer(n) der früheren Anmeldung(en)
nach Art. 76 EPÜ:
**19809762.8 / 3 762 624**

(71) Anmelder:
- **BMTS Technology GmbH & Co. KG
70376 Stuttgart (DE)**
- **Berger, Martin
75038 Oberderdingen (DE)**

(72) Erfinder:
- **BERGER, Martin
75038 Oberderdingen-Flehingen (DE)**

- **KLEINSCHMIDT, Rüdiger
74354 Besigheim (DE)**
- **STETTER, Frieder
70597 Stuttgart (DE)**
- **KUHNE, Oliver
70374 Stuttgart (DE)**
- **SCHMITT, Steffen
71254 Ditzingen (DE)**

(74) Vertreter: **Herrmann, Jochen
Patentanwalt
European Patent Attorney
Königstrasse 30
70173 Stuttgart (DE)**

Bemerkungen:
Diese Anmeldung ist am 15-08-2022 als
Teilanmeldung zu der unter INID-Code 62 erwähnten
Anmeldung eingereicht worden.

(54) **ABGASTURBOLADER MIT EINEM HYDRODYNAMISCHEN GLEITLAGER ODER
HYDRODYNAMISCHES GLEITLAGER**

(57)   Abgasturbolader mit einem hydrodynamischen Gleitlager oder hydrodynamisches Gleitlager, mit einem Rotor (10) und einem dem Rotor (10) zugeordneten Gegen-Lagerteil (50), wobei sich eine Rotor-Lagerfläche (17.1, 17.2, 17,3) des Rotors (10) und eine Gegenfläche des Gegen-Lagerteils (50) gegenüberstehen, um ein hydrodynamisches Gleitlager zu bilden, wobei die Rotor-Lagerfläche und/oder die Gegenfläche bei einem Schnitt längs und durch die Rotationsachse (R) in Schnittansicht eine durchgehende Lagerkontur bildet/bilden, die wenigstens zwei ineinander übergehende Konturabschnitte (44.1 bis 44.3; 53.1 bis 53.3) bilden, um hydrodynamische Tragfähigkeiten sowohl in radialer als auch in axialer Richtung zu erzeugen, und wobei das Gegen-Lagerteil (50) in ein Lagergehäuse (60) oder ein Gehäuseteil eingebaut ist,. Um einen solchen Abgasturbolader mit einer kompakt bauenden und leistungsfähigen Lageranordnung mit einem hydrodynamischen Gleitlager bereitzustellen zu können, wobei gleichzeitig das hydrodynamische Gleitlager mit geringem Teileaufwand einfach zu montieren ist, ist es erfindungsgemäß vorgesehen, dass zwischen einer Außenkontur des Gegen-Lagerteils (50) und dem Lagergehäuse (60) oder dem Gehäuseteil ein, vorzugsweise umlaufender Spaltbereich (57) zur Bildung eines Quetschölfilms gebildet ist, wobei der Spaltbereich (57) mit einem Schmiermittel-Führungskanal (61) in räumlicher Verbindung steht, und dass sich der Spaltbereich (57) und die durchgehende Lagerkontur des Rotors (10) und/oder des Gegen Lagerteils (50) in Richtung der Rotationsachse (R) zumindest bereichsweise überdecken.

EP 4 134 560 A1

Fig. 1

## Beschreibung

Die Erfindung betrifft einen Abgasturbolader mit einem hydrodynamischen Gleitlager oder ein hydrodynamisches Gleitlager, mit einem Rotor und einem dem Rotor zugeordneten Gegen-Lagerteil, wobei sich eine Rotor-Lagerfläche des Rotors und eine Gegenfläche des Gegen-Lagerteils gegenüberstehen, um ein hydrodynamisches Gleitlager zu bilden, wobei die Rotor-Lagerfläche und/oder die Gegenfläche bei einem Schnitt längs und durch die Rotationsachse (R) in Schnittansicht eine durchgehende Lagerkontur bildet/bilden, die wenigstens zwei ineinander übergehende Konturabschnitte bilden, um hydrodynamische Tragfähigkeiten sowohl in radialer als auch in axialer Richtung zu erzeugen, und wobei das Gegen-Lagerteil in ein Lagergehäuse oder ein Gehäuseteil eingebaut ist,

Die Erfindung betrifft auch ein solches hydrodynamisches Gleitlager mit einem derartigen Rotor und einem Gegen-Lagerteil.

Rotierende Maschinenelemente, wie z.B. Wellen, Laufrollen, Zahn- oder Pumpenräder benötigen eine Führung in radialer und axialer Richtung, um Kräfte und Drehmomente übertragen zu können. Diese Aufgabe kann von hydrodynamisch wirkenden Gleitlagern übernommen werden. Die Funktion dieses Lagertyps basiert auf dem physikalischen Prinzip der hydrodynamischen Druckerzeugung. Zwischen dem Rotor und dem Stator (Gegen-Lagerteil) ist bei hydrodynamischen Gleitlagern ein geeigneter Schmierstoff gehalten. Bei einer Drehbewegung des Rotors relativ zum Stator entstehen im Schmierstoff Scherkräfte, die diesen dann mit einer bestimmten Geschwindigkeit durch das Lager transportieren. Bei einem konvergierenden Lagerspalt ergibt sich hieraus ein hydrodynamischer Druckanstieg. Bei divergierendem Spaltverlauf - im Anschluss an den konvergierenden Lagerspalt, entsteht ein Druckabfall. Ist die Relativgeschwindigkeit zwischen Rotor und Stator ausreichend hoch, baut sich durch den hydrodynamischen Druck eine ausreichend dicke Schmierstoffschicht auf, welche die beiden Gleitpartner voneinander trennt. Die Reibung findet in diesem Betriebszustand in der Schmierstoffschicht statt (Flüssigkeitsreibung). Die so erzeugten hydrodynamischen Drücke halten in Verbindung mit der eingesetzten Fläche den äußeren Kräften das Gleichgewicht und beschreiben die Tragfähigkeit des Gleitlagers. Zur Erzeugung des hydrodynamischen Drucks wird keine zusätzliche Energie in Form von Druckarbeit bzw. ein Schmierstoffvolumen, welches mit einem bestimmten Druck über Nuten oder Taschen zugeführt wird, benötigt. Die Tragfähigkeit ergibt sich aus den Betriebsgrößen. Die Grundlagen zur nummerischen Berechnung des hydrodynamischen Drucks sind in der DIN 31652 Teil 1 (DIN Taschenbuch 198; Gleitlager 2; Beuth Verlag GmbH; Berlin, Köln 1991) dargestellt.

Zum Stand der Technik gehören zwei grundsätzliche Lagertypen:

1. Hydrodynamische Radialgleitlager
Hydrodynamische Radialgleitlager werden häufig in Form von zylindrischen Buchsen als segmentierte Variante oder als Kippsegmentlager ausgeführt. Siehe hierzu (DIN 31652 Teil 2 und VDI-Richtlinien 2204). Die hydrodynamisch wirksamen Elemente (z.B. Segmente) des Gleitlagers sind zylindrisch und damit parallel zur Rotationsachse angeordnet. Der konvergierende Spaltverlauf ergibt sich aus der exzentrischen Lage vom Rotor zum Stator.
2. Hydrodynamische Axialgleitlager
Hydrodynamische Axialgleitlager werden in Form einer Anlaufscheibe mit diversen Nuten bzw. Oberflächenmodifikationen in Form von Staurändern, Keilflächen oder Spiralrillen ausgebildet. Sie können auch als so genanntes Kippsegment-Lager gestaltet sein (siehe hierzu DIN 31653 Teil 1 bis 3; DIN 31654 Teil 1 bis 3). Die Anordnung des Axialgleitlagers erfolgt dabei orthogonal zur Rotationsachse, mit einer in der Regel rotierenden Spurscheibe als Gegenlaufpartner. Der für die hydrodynamische Druckerzeugung benötigte konvergierende Spaltverlauf ergibt sich aus der Gestaltung der Oberflächenstrukturen (Taschen, Rampen, etc.), durch die Neigung der kippbeweglichen Segmente oder einem Winkelversatz zwischen Lager zur Spurscheibe.

Wenn bei einer technischen Lösung sowohl radiale als auch axiale Lasten entstehen, so müssen beide vorgenannten Lagertypen zum Einsatz kommen. Die Axiallasten werden dann über ein Axialgleitlager und die Radiallasten über das Radialgleitlager abgetragen. Die beiden Lagertypen sind dann jeweils getrennt voneinander zu berechnen und auszulegen, wodurch sowohl bei der Konstruktion als auch bei der Produktion entsprechend hohe Kosten entstehen.

Aus der DE 10 2008 059 598 A1 ist ein Abgasturbolader bekannt. Dieser weist eine Welle auf, die an ihren Enden ein Turbinenrad bzw. ein Verdichterrad trägt. Die Welle ist mittels zweier hydrodynamischer Gleitlager in einem Gehäuse gelagert. Diese sind in Form von Kegellagern ausgeführt.

Ein weiterer Abgasturbolader ist in der WO 2014/105377 A1 und der EP 1 972 759 B1 beschrieben. Hochdrehende Läufer, die in Lagern, wie in der EP 1 972 759 B1 offenbart, gelagert sind, sind in der Regel durch eine relativ geringe Tragfähigkeit, insbesondere in radialer Richtung, gekennzeichnet. Durch die Art und Weise wie der hydrodynamische Tragfilm in solchen Lagern erzeugt wird, sind relativ steife Dämpfungseigenschaften der Lagerung erforderlich, die wiederum eine relativ lange Bauweise des Radiallagers bedingen, um die aus den radialen Beschleunigungen resultierenden radialen Lasten abtragen zu können.

In der DE 20 2016 105 071 U1 ist ein Abgasturbolader beschrieben, der in einem Lagergehäuse einen Rotor trägt. Der Rotor weist dabei eine Rotorwelle auf, die innerhalb eines Gegen-Lagers drehbar gehalten ist. Zwischen dem Rotor und dem Gegen-Lager sind an gegenüberliegenden Seiten des Gegen-Lagers hydrodynamische Gleitlager vorgesehen. Zu diesem Zweck bilden der Rotor als auch das Gegen-Lager Lagerkonturen. Die Lagerkonturen sind dabei aus Konturabschnitten zusammengesetzt. Bei einem Schnitt längs und durch die Rotationsachse bilden die Lagerkonturen in Schnittansicht durchgehende Geometrien. Die durchgehenden Lagerkonturen sind dabei geometrisch so ausgebildet, dass sie in Schnittansicht und längs der Rotationsachse stetig differenzierbar sind. Auf diese Weise ergeben sich hoch-leistungsfähige hydrodynamische Gleitlager, die dazu geeignet sind sowohl axiale als auch radiale Lasten auf kleinstem Raum abzutragen. Hierdurch entstehen dann, aufgrund der kompakten Bauweise, allerdings hohe Lagerkräfte, die zuverlässig abgetragen werden müssen.

Bei dem aus der DE 20 2016 105 071 U1 bekannten Turbolader ist im Bereich des Verdichterrads zur Verringerung des Teileaufwands eine Dichtbuchse verwendet. Diese ist in Form eines Rotorteils ausgebildet, welches auf die Rotorwelle aufgeschoben ist. Dieses Rotorteil bildet beim hydrodynamischen Gleitlager die Lagerkontur des Rotors. Gleichzeitig besitzt das Rotorteil eine Dichtungsaufnahme, beispielsweise in Form einer oder mehrerer Kolbenringnuten, die zum Beispiel einen Kolbenring aufnehmen und damit den Innenraum des Lagergehäuses gegenüber dem Verdichtergehäuse des Abgasturboladers abdichten kann. Das Rotorteil ist passgenau auf die Rotorwelle aufgeschoben, um ein möglichst geringes Radialspiel zu bewirken.

Es ist Aufgabe der Erfindung, einen effizienten Abgasturbolader mit einer kompakt bauenden und leistungsfähigen Lageranordnung mit einem hydrodynamischen Gleitlager bereitzustellen.

Es ist auch Aufgabe der Erfindung, ein solches hydrodynamisches Gleitlager zur Verfügung zu stellen.

Diese Aufgaben werden gemäß der Erfindung dadurch gelöst, dass zwischen einer Außenkontur des Gegen-Lagerteils und dem Lagergehäuse oder dem Gehäuseteil ein, vorzugsweise umlaufender Spaltbereich zur Bildung eines Quetschölfilms gebildet ist, wobei der Spaltbereich mit einem Schmiermittel-Führungskanal in räumlicher Verbindung steht, und dass sich der Spaltbereich und die durchgehende Lagerkontur des Rotors und/oder des Gegen Lagerteils in Richtung der Rotationsachse zumindest bereichsweise überdecken.

In dem Spaltbereich kann ein Quetschölfilm erzeugt werden. Dies ist möglich, da der Spaltbereich an eine Schmiermittel-Versorgung, mit beispielsweise einer Druckpumpe, angeschlossen ist. Auf diese Weise wird, durch Verdrängen des Schmierstoffs, ein Druck und somit der tragfähige Quetschölfilm im Spaltbereich erzeugt.

Die im Rahmen der Erfindung eingesetzten Lagertypen mit durchgehender und stetig differenzierbarer Lagerkontur, die verschiedene Konturabschnitte aufweisen, zeichnen sich bereits durch eine besonders ruhig laufende und geräuscharme Betriebsweise aus. Daher kann der Spaltbereich so dimensioniert werden, dass eine relativ weiche Dämpfungswirkung des Quetschölfilms entsteht. Hierdurch und durch die direkte Zuordnung des Spaltbereichs zur durchgehenden Lagerkontur ergibt sich eine Lagergestaltung mit einer weichen Dämpfungscharakteristik im Bereich des Quetschölfilms. Dies führt letztendlich auch dazu, dass mit einer weicheren Dämpfung eine geringere Tragfähigkeit des hydrodynamischen Lagers erforderlich wird, was zu einer weiteren Reduzierung der Baugröße des hydrodynamischen Gleitlagers, und damit dessen Reibleistung führt. Schließlich führt diese Lagerauslegung auch zu einer verbesserten Kraftabtragung

Bei der Auslegung des Quetschölfilms mit einer weichen Dämpfungs-Charakteristik zur Reduktion der Reibleistung ist weiterhin zu beachten, dass eine weiche Dämpfungs-Charakteristik zu einer erhöhten Auslenkung des Rotors führt, was eine Vergrößerung der Konturspalte zwischen Turbinen- bzw. Verdichterrad und dem Turbinen bzw. Verdichterrad-Gehäuse bedingt.

Zu diesem Zweck und der Einstellung der Dämpfungs-Charakteristik kann es im Rahmen der Erfindung vorgesehen sein, dass zwischen dem Gegen-Lagerteil und dem Lagergehäuse oder dem Gehäuseteil im Spaltbereich ein in radialer Richtung verlaufendes, auf den äußeren Durchmesser des Spaltbereichs bezogenes relatives Spiel im Bereich zwischen 5 bis 10 Promille gebildet ist. Insbesondere für die Anwendung in Abgasturboladern für Pkws eignet sich ein relatives Spiel im Bereich zwischen 7 bis 9 Promille, bezogen auf den äußeren Durchmesser des Spaltbereichs. Hierdurch wird ein vorteilhafter Kompromiss zwischen einer möglichst geringen Auslenkung und einer möglichst weichen Dämpfungs-Charakteristik, zur Optimierung des Gesamt-Wirkungsgrads der Lageranordnung und des Turboladers, bestehend aus Verdichter- und Turbinen-Wirkungsgrad und dem Wirkungsgrad der Lagerung erreicht.

Der Spaltbereich weist in der Regel die Form eines Hohlzylinders auf. Grundsätzlich ist auch denkbar, dass der Spaltbereich eine andere Geometrie, insbesondere die eines Hohlkonus, aufweist. In diesem Fall, in dem der Spaltbereich eine andere Geometrie aufweist, ist der in Bezug genommene äußere Durchmesser der mittlere Durchmesser

Gemäß einer denkbaren Erfindungsvariante kann es vorgesehen sein, dass das radiale Spiel zwischen dem Gegen-Lagerteil und dem Lagergehäuse oder dem Gehäuseteil größer ist als das radiale Spiel zwischen dem Rotorteil und dem Gegen-Lagerteil.

Gemäß einer denkbaren Erfindungsvariante ist das radiale Spiel zwischen dem Gegen-Lagerteil und dem Lagergehäuse (oder dem Gehäuseteil) und die axiale Erstreckung des Spaltbereichs definiert durch die Beziehung: Axiale Erstreckung des Spaltbereichs in Millimeter gleich 9 minus C mal radiales Spiel zwischen dem Gegen-Lagerteil und dem Lagergehäuse in Millimeter, wobei C im Bereich zwischen 61 bis 75 liegt. Bevorzugt ist C im Bereich zwischen 66 und 70 gewählt.

Auf diese Weise kann eine relativ weiche Dämpfungscharakteristik im Quetschölfilm erreicht werden. Hierdurch können niedrige radiale Lagerkräfte verwirklicht werden. Dies ermöglicht eine Reduzierung der benötigten axialen Lagerlänge und damit einhergehend, eine Verringerung der Reibleistung, ohne signifikante Verluste beim thermodynamischen Wirkungsgrad der Turbine und des Verdichters hinnehmen zu müssen. Dies ist bei hochdrehenden Anwendungen, beispielsweise modernen Abgasturboladern oberhalb von 200.000 Umdrehungen/min von besonderer Bedeutung.

Die durch eine angepasste Dämpfung niedrigere erforderliche Tragfähigkeit des hydrodynamischen Gleitlagers kann in diesem Zusammenhang insbesondere dadurch verwirklicht werden, dass die axiale Überdeckung in Richtung der Rotationsachse zwischen dem Gegen-Lagerteil und dem Lagergehäuse oder dem Gehäuseteil im Spaltbereich, zur Bildung eines Quetschölfilms derart bemessen ist, dass das Verhältnis der Erstreckung des Spaltbereiches in Richtung der Rotationsachse zu dem Radialspiel zwischen dem Gegen-Lagerteil und dem Lagergehäuse oder dem Gehäuseteil beträgt:

Axiale Erstreckung des Spaltbereiches in Richtung der Rotationsachse / Radialspiel
= 40 bis 80.

Besonders bevorzugt kann dieses Verhältnis im Bereich zwischen 45 bis 70 gewählt sein.

Während des Betriebseinsatzes werden im Bereich des hydrodynamischen Gleitlagers, wie dies bereits oben bei der Diskussion des Standes der Technik erwähnt wurde, hohe Lagerkräfte erzeugt. Die Erfinder haben nun erkannt, dass eine zuverlässige Lastabtragung dieser, insbesondere hohen Radiallasten von dem hydrodynamischen Gleitlager in die Rotorwelle erforderlich ist, um eine zuverlässige Betriebsweise zu garantieren. Zu diesem Zweck wird vorgeschlagen, dass sich der Stützabschnitt, mit dem sich das Rotorteil gegenüber der Rotorwelle abstützt, in Richtung der Rotationsachse mit zumindest einem der Konturabschnitte des Gegen-Lagerteils, vorzugsweise mit dem Lagerbereich, in dem die Radiallasten größtenteils abgestützt werden, überdeckt ist. Auf diese Weise wird eine unmittelbare Kraftableitung in radialer Richtung und auf direktem Weg von diesem Konturabschnitt über den Stützabschnitt in die Rotorwelle erreicht. Das Rotorteil bleibt dabei einfach montierbar, denn es kann beispielweise auf die Rotorwelle aufgeschoben werden, wobei dann der Stützabschnitt dem entsprechenden Lagerbereich des Rotorteils zugeordnet wird. Im montierten Zustand ist das Rotorteil dabei insbesondere kippstabil gehalten, was dazu führt, dass der Schmierstoffspalt im hydrodynamischen Gleitlager während des Betriebseinsatzes, auch bei wechselnden Belastungen, zuverlässig aufrechterhalten bleibt.

Gemäß einer bevorzugten Erfindungsvariante kann es vorgesehen sein, dass das Rotorteil einen Lagerbereich aufweist, der die Konturabschnitte bildet, und dass der Lagerbereich so angeordnet ist, dass wenigstens einer dieser Konturabschnitte in Richtung der Rotationsachse den Stützabschnitt zumindest bereichsweise überdeckt. Dadurch dass das Rotorteil unmittelbar die Konturabschnitte für den Lagerbereich bildet, wird der Teileaufwand deutlich reduziert. Durch die geringe Anzahl der Bauteile des Gleitlagers, in dem sich in radialer Richtung an den Stützabschnitt anschließenden Lagerbereich, wird auch die Summe der Fertigungstoleranzen in diese Richtung minimiert, was zu einer maßhaltigen und einfach reproduzierbar fertigbaren Lager-Anordnung führt, bei der das Lagerspiel im hydrodynamischen Gleitlager präzise eingehalten werden kann.

Gemäß einer bevorzugten Ausgestaltungsvariante der Erfindung kann es vorgesehen sein, dass das radiale Spiel zwischen dem Stützabschnitt der Rotorwelle und dem am Stützabschnitt anliegenden Bereich des Rotorteils kleiner ist, als das radiale Spiel zwischen dem Rotorteil und dem Gegen-Lagerteil, bevorzugt weniger als 80%, besonders bevorzugt weniger als 60% des radialen Spiels zwischen dem Rotorteil und dem Gegen-Lagerteil entspricht.

Es hat sich gezeigt, dass ein Passsitz zwischen dem Stützabschnitt der Rotorwelle und dem Lagerbereich des Rotorteils dann zu einem betriebssicher arbeitenden Gleitlager führt, wenn vorgesehen ist, dass zwischen dem Stützabschnitt der Rotorwelle und dem am Stützabschnitt anliegenden Bereich des Rotorteils, ein Passsitz, mit einem auf den Durchmesser des Stützabschnitts bezogenen relativen radialen Lagerspiel zwischen Rotor und Stator des hydrodynamischen Gleitlagers im Bereich zwischen -6 bis +6 Promille vorgesehen ist. Ein guter Kompromiss zwischen dem Unwucht-Verhalten des Rotors und einer einfachen Montage des Rotorteils ergibt sich dann, wenn vorgesehen ist, dass ein radiales Spiel in diesem Passsitz in der ISO-Grundtoleranzklasse IT3 bis IT8 gebildet ist,

Eine Anordnung, welche gemäß einer oder mehrerer der vorstehend genannten Dimensionierungsvorgaben gestaltet ist, eignet sich insbesondere für die Zwecke zur Anwendung in einem Abgasturbolader für einen Pkw. Insbesondere entstehen bei einer solchen Anordnung nur geringe Unwuchten. Darüber hinaus ist dabei auch stets ein ausreichender Schmierspalt im hydrodynamischen Gleitlager garantiert. Selbst die dabei mögliche minimale Schmierspaltdicke ist in diesem Zusammenhang so dimensioniert, dass bei dem speziellen Lagertyp gemäß der Erfindung ein ausreichender Schmiermittelfluss möglich ist. Dieser Schmiermittelfluss ist dabei dann auch insbesondere derart, dass innerhalb des Schmierstoffspalts des hydrodynamischen Gleitlagers keine solchen Wirbelströmungen im Schmierstoff auftreten, welche zu einer störenden akustischen Beeinträchtigung führen würden. Insbesondere entstehen dann bei einem solchen hydrodynamischen Gleitlager keine selbsterregenden Wirbelströmungen im Schmierstoff.

Zur Verringerung des Teileaufwands kann es vorgesehen sein, dass das Rotorteil ein Basisteil aufweist, das mit zumindest einer Dichtungsaufnahme versehen ist, in die ein umlaufendes Dichtelement eingelegt ist.

Um eine exakte Zuordnung des Rotorteils zu dem Gegen-Lagerteil garantieren zu können, kann es gemäß einer Ausgestaltungsvariante der Erfindung vorgesehen sein, dass das Rotorteil einen Ansatz mit einer Anschlagfläche aufweist, und dass die Anschlagfläche an einer radial verlaufenden Fläche eines Bunds der Rotorwelle flächig anschlägt.

Die vorgeschriebene flächige Anlage ermöglicht es auch eine axiale Spannkraft in das Rotorteil einzubringen, sodass es zwischen einem Verdichterrad und dem Bund vorzugsweise unter Einwirkung einer Schraubverbindung, verspannt, axial gesichert und in Umfangsrichtung unverdrehbar gehalten ist. Durch diese Maßnahme ergibt sich eine einfache Montage mit geringem Teileaufwand.

Wie dies bereits vorstehend angedeutet wurde, eignen sich die oben diskutierten einzelnen Maßnahmen insbesondere in Verbindung mit einem speziellen vorteilhaften Lagertyp nach der Erfindung, wobei die durchgehende und aus den zwei oder mehreren Konturabschnitten bestehende Lagerkontur der RotorLagerfläche und/oder der Gegenfläche bei einem Schnitt längs und durch die Rotationsachse in Schnittansicht stetig differenzierbar ausgebildet ist. Bei diesem Lagertyp lassen sich hydrodynamische Tragfähigkeiten über die Konturabschnitte und vorzugsweise die gesamte Lagerkontur sowohl in axialer als auch in radialer Richtung erzeugen. Die hydrodynamischen Gleitlager können als Mehrflächengleitlager ausgebildet sein. Sie können weiterhin auch mit zwei oder mehreren Schmierkeilen ausgestattet sein.

Mit der durchgehenden und im Querschnitt variierenden Lagerkontur, insbesondere im Bereich des konvergierenden Spalts des hydrodynamischen Gleitlagers, können Druckbereiche erzeugt werden, die sowohl axiale als auch radiale Lasten abtragen. Dadurch entstehen im hydrodynamischen Gleitlager 3-dimensionale hydrodynamische Tragfähigkeiten. Die Erfindung nutzt den physikalischen Effekt, wonach der lokal erzeugte hydrodynamische Druck normal auf eine Fläche wirkt. Daraus ergeben sich lokale Tragfähigkeiten. Da im Rahmen der Erfindung die Oberfläche der Lagerkontur dreidimensional gestaltet werden kann, ergeben sich daraus lokale Kraftkomponenten mit entsprechenden Richtungen. Aus der integralen Summe der einzelnen Kraftkomponenten können die Tragfähigkeitskomponenten des Lagers und damit die dreidimensionale Tragfähigkeit berechnet und für den gewünschten Anwendungsfall ausgelegt werden.

Dabei können die hydrodynamischen Gleitlager, wie oben angedeutet, als Mehrflächengleitlager, bspw. mit zwei oder mehreren Schmierkeilen ausgestattet sein. Durch die Segmentierung der Lagerung im Bereich der Konturabschnitte wird eine Verringerung der Reibung erreicht. Darüber hinaus verbessert sich bei diesem Lager auch die axiale Tragfähigkeit, da zwischen den einzelnen Konturabschnitten ein kontinuierlicher und stetig differenzierbarer Übergang geschaffen wird. Hierdurch wird insgesamt eine höhere Tragfähigkeit bei gleichbleibender Reibleistung erreicht. Die Segmentierung der Lageranordnung führt auch zu einer weiteren Reduzierung der Schallemission.

Gemäß einer möglichen Erfindungsvariante kann es vorgesehen sein, dass zwischen der Rotorwelle und dem Rotorteil in Richtung der Rotationsachse mittelbar oder unmittelbar neben dem Stützabschnitt ein, vorzugsweise ringförmiger Abstandsraum, gebildet ist. Dies führt zu einer eindeutigen Abstützung des Rotorteils am Stützabschnitt. Darüber hinaus wird die Montage aufgrund der geringeren Führungslänge des Rotorteils vereinfacht. Besonders bevorzugt kann es dabei vorgesehen sein, dass der Abstandsraum von einer Durchmesservergrößerung im Rotorteil gebildet ist, die sich an den Lagerbereich des Rotorteils anschließt. Hierdurch wird die Fertigung vereinfacht. Zudem kann dann die Rotorwelle in diesem Bereich unbeeinflusst bleiben, was zu einer höheren Stabilität führt.

Die Erfindung wird im Folgenden anhand eines in den Zeichnungen dargestellten Ausführungsbeispiels näher erläutert. Es zeigen:

Figur 1                einen Abgasturbolader in Schnittdarstellung und

Figuren 2 und 3     vergrößerte Detaildarstellungen, die der Figur 1 entnommen sind.

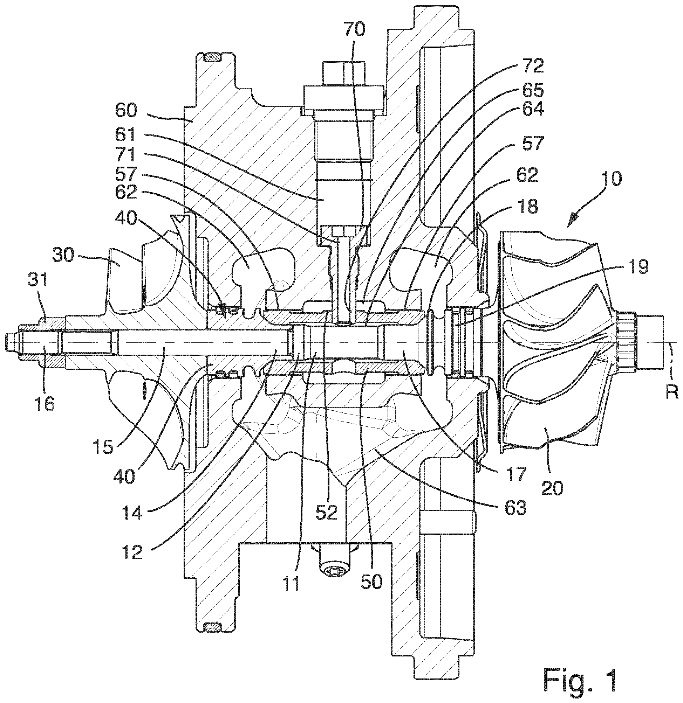

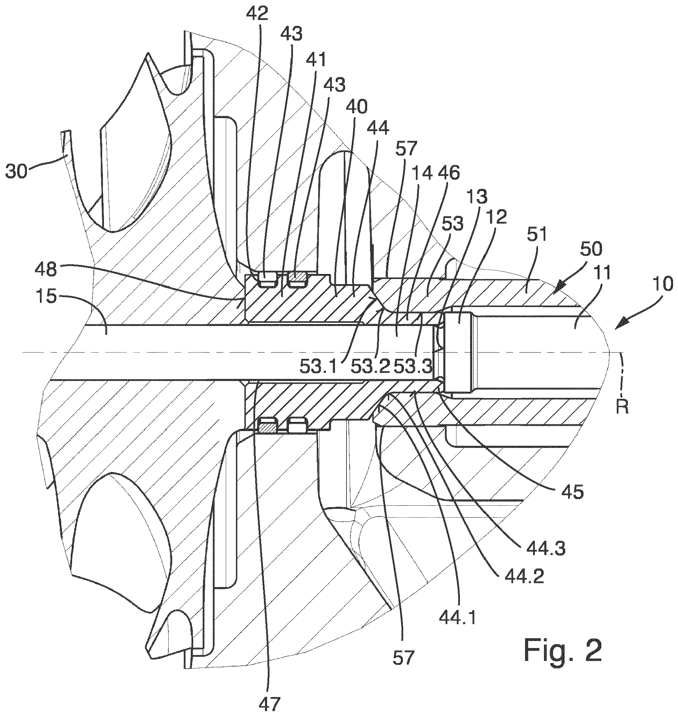

Figur 1 zeigt einen Abgasturbolader in Seitenansicht und im Schnitt. Der Abgasturbolader weist einen Rotor 10 mit einer Rotorwelle 11 auf. Die Rotorwelle 11 besitzt einen Mittenabschnitt, der eine Verjüngung aufweisen kann. An seinem zum Verdichter weisenden Ende weist der Mittenabschnitt einen Anschlag 13 auf. Zwischen dem Anschlag 13 und der Verjüngung des Mittenabschnitts kann demzufolge ein umlaufender Bund 12 ausgebildet sein. Der Anschlag 13 ist in Figur 2 erkennbar. Wie diese Darstellung veranschaulicht, kann der Anschlag 13, vorzugsweise als Wellenschulter mit einer radial ausgerichteten Fläche, ausgeführt sein, die ringförmig umläuft. Im Anschluss an den Bund 12 besitzt die Rotorwelle 11 verdichterseitig einen Stützabschnitt 14. Dieser kann in Form einer bearbeiteten umlaufenden Fläche ausgebildet sein. Der Stützabschnitt 14 geht in einen Wellenabschnitt 15 über, der dann in einem Gewindeabschnitt 16 ausläuft.

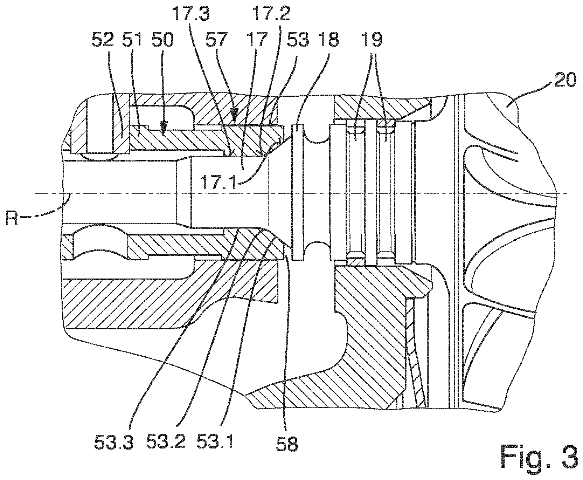

Auf der dem Gewindeabschnitt 16 gegenüberliegenden Seite der Rotorwelle 11 kann vorzugsweise ein Lagerabschnitt 17 vorgesehen sein. Der Lagerabschnitt 17 kann durch Bearbeitung der Rotorwelle 11 von dieser gebildet sein. Wie die Darstellung gemäß Figur 3 erkennen lässt, weist der Lagerabschnitt 17 der Rotorwelle 11 eine umlaufende Lagerkontur auf. Diese Lagerkontur weißt mehrere Konturabschnitte 17.1 bis 17.3 auf und ist vorzugsweise einteilig mit der Rotorwelle 11 ausgebildet. Der Axialkräfte oder Radial- und/oder Axialkräfte abtragende Konturabschnitt 17.1 kann beispielsweise stumpfkegelförmig ausgebildet sein um radiale Kräfte aufzunehmen. Er kann auch konvex oder konkav ausgebildet sein. Der Konturabschnitt 17.3 kann zylinderförmig ausgebildet sein. Die beiden Konturabschnitte 17.1 und 17.3 sind über den Konturabschnitt 17.2 miteinander verbunden. Dabei ist die Zuordnung so getroffen, dass die Konturabschnitte 17.1 bis 17.3 durchgehend ineinander übergehen und somit die durchgehende Lagerkontur bilden. Bei einem Schnitt durch die Rotationsachse R der Rotorwelle 11, wie er in Figur 3 veranschaulicht ist, ist die Lagerkontur längs der Rotationsachse R stetig differenzierbar ausgebildet. Es ist ebenso vorstellbar, dass die Konturabschnitte 17.1 bis 17.3 durch eine mehrfach stetig differenzierbare Funktion gebildet werden, und somit eine krümmungsstetige Lagerkontur formen.

Im Anschluss an den Konturabschnitt 17.1 kann die Rotorwelle 11 einen Abweiser 18 in Form einer Ölschleuderscheibe, beispielsweise in Form einer Durchmesservergrößerung aufweisen. Im vorliegenden Ausführungsbeispiel ist die Durchmesservergrößerung in Form eines umlaufenden Bunds ausgebildet. Der Abweiser 18 kann jedoch auch eine andere geeignete Kontur aufweisen die eine Öl-Leckage durch den Wellendurchtritt im Lagergehäuse wirkungsvoll verhindert oder zumindest reduziert.

Die Rotorwelle 11 kann auch, wie Figur 3 erkennen lässt wenigstens eine Dichtungsaufnahme 19 aufweisen. Im vorliegenden Ausführungsbeispiel sind zwei Dichtungsaufnahme 19, beispielsweise in Form von Kolbenringnuten, verwendet, die zueinander axial beabstandet angeordnet sind. In die Dichtungsaufnahmen 19 sind Kolbenringe eingesetzt. An dem dem Verdichterrad gegenüberliegenden Ende der Rotorwelle 11 ist ein Turbinenrad 20 angeordnet. Das Turbinenrad 20 ist in der Regel stoffschlüssig mit der Rotorwelle 11 verbunden.

Auf der dem Turbinenrad 20 abgewandten Seite besitzt der Rotor 10 einer Rotorteil 40. Dieses Rotorteil 40 ist vergrößert in Figur 2 veranschaulicht. Wie diese Darstellung zeigt, besitzt das Rotorteil 40 ein Basisteil 41. In das Basisteil 41 kann beispielsweise wenigstens eine umlaufende Dichtungsaufnahme 42 in Form einer Kolbenring-Nut aufweisen. Im vorliegenden Ausführungsbeispiel sind zwei umlaufende Dichtungsaufnahmen 42 verwendet. In die Dichtungsaufnahme 42 sind ringförmige Dichtelemente 43 in Form von Kolbenringen eingesetzt.

Das Rotorteil 40 besitzt im Anschluss an das Basisteil 41 einen Lagerabschnitt 44. Der Lagerabschnitt 44 bildet eine umlaufende Lagerkontur, die ähnlich oder baugleich mit der Lagerkontur sein kann, welche die Konturabschnitte 17.1 bis 17.3 aufweist, wobei der Lagerabschnitt 44 Konturabschnitte 44.1 bis 44.3 aufweist, die die Lagerkontur bilden. Der Konturabschnitt 44.1 zur Aufnahme der Axiallasten ist vorzugsweise stumpfkegelförmig ausgebildet, kann jedoch auch konvex oder konkav gewölbt sein. Weiterhin ist wieder ein zylindrischer Konturabschnitt 44.3 zur Aufnahme radialer Lasten verwendet. Die beiden Konturabschnitte 44.1 und 44.3 werden unter Vermittlung des Konturabschnitts 44.2 miteinander verbunden, bzw. werden mittels des Konturabschnitts 44.2 ineinander überführt. Der Konturabschnitt 44.2 kann ähnlich wie der Konturabschnitt 17.2 hohlkehlförmig ausgebildet sein. Mit den Konturabschnitten 44.1 bis 44.3 wird die durchgehende Lagerkontur gebildet. Bei einem Schnitt durch die Rotationsachse R gemäß Figur 2 bildet die Lagerkontur in Schnittansicht eine durchgehende und stetig differenzierbare Kontur. Dies ist in der Zeichnung deutlich erkennbar, wobei die Konturabschnitte 44.1 bis 44.3 ohne Stetigkeitssprünge durchgehend ineinander übergehen. Wie auch bei der turbinenseitigen Lagerkontur 17.1 bis 17.3 ist hier ebenfalls vorstellbar, dass die Konturabschnitte 44.1 bis 44.3 durch eine mehrfach stetig differenzierbare Funktion gebildet werden, und somit eine krümmungsstetige Lagerkontur formen

An seinem dem Bund 12 zugewandten Ende kann das Rotorteil 40 einen Ansatz 45 aufweisen. Dieser ist vorzugsweise von dem Lagerabschnitt 44 gebildet. Die Stirnfläche des Ansatzes 45 ist radial ausgerichtet. Auf diese Weise liegt der Ansatz 45 endseitig flächig an dem Anschlag 13 des Bundes 12 an. Um die flächige Anlage zu garantieren, ist der Ansatz 45 innenseitig umlaufend angefast. Zudem ist im Anschluss an den Bund 12 zu diesem Zweck ein Freistich in die Rotorwelle 11 eingedreht, wie Figur 2 zeigt.

Das Rotorteil 40 liegt an dem den Lagerbereich 46 bildenden Lagerabschnitt 44 an dem Stützabschnitt 14 der Rotorwelle 11 an. Dabei ist zwischen dem Rotorteil 40 und der Rotorwelle 10 ein Passsitz, vorzugsweise in Form einer Übergangspassung, gebildet. Vorzugsweise ist eine Übergangspassung in der ISO-Grundtoleranzklasse IT3 bis IT8 verwirklicht. Die Bohrung, welche in den Lagerbereich 46 eingebracht ist und zur Anlage an dem Stützabschnitt 14 dient, weist im Anschluss an den Lagerbereich 46 eine Durchmesservergrößerung auf, die einen Rücksprung 47 bildet. Mittels des Rücksprungs 47 ergibt sich zwischen dem Rotorteil 40 und dem Außenumfang der Rotorwelle 11 ein ringförmiger Freiraum.

Das Basisteil 41 weist eine ringförmige und radial verlaufende Anlagefläche 48 auf. Diese Anlagefläche 48 ist mithin parallel der Anlagefläche des Lagerabschnitts 44, welche an dem Bund 12 anliegt.

Auf die Rotorwelle 11 wird im Bereich des Wellenabschnitts 15 ein Verdichterrad 30 aufgeschoben. Das Verdichterrad 30 liegt mit einer radial verlaufenden Anlagefläche an der Anlagefläche 48 des Rotorteils 40 an. Zur Fixierung des Rotorteils 40 und des Verdichterrads 30 ist eine Mutter 31 auf den Gewindeabschnitt 16 aufgeschraubt. Die Mutter 31 verspannt mithin das Verdichterrad 30 gegen das Rotorteil 40 und das Rotorteil 40 gegen den Anschlag 13. Auf diese Weise werden sowohl das Verdichterrad 30 als auch das Rotorteil 40 axial auf der Rotorwelle 11 festgelegt und daran in Umfangsrichtung unverdrehbar gehalten

Wie Figur 1 erkennen lässt, besitzt der Abgasturbolader ein Gegen-Lagerteil 50, welches in ein Lagergehäuse 60 des Abgasturboladers eingesetzt ist. Das Gegen-Lagerteil besitzt ein Mittelteil 51. An den Mittelteil 51 schließen sich beidseitig Ansätze 53 an. Die beiden Ansätze 53 weisen jeweils eine umlaufende Lagerkontur auf. Diese umlaufende Lagerkontur ist komplementär zu der Lagerkontur die durch das Rotorteil 14 bzw. den Lagerabschnitt 17 der Rotorwelle 11 gebildet ist ausgeführt. Dementsprechend weisen diese Lagerkonturen Konturabschnitte 53.1 bis 53.3 auf, die wieder umlaufend ausgeführt sein können. Der die Axialkräfte aufnehmende Konturabschnitt 53.1 ist zum Beispiel stumpfkegelförmig und der Konturabschnitt 53.3 zum Beispiel zylindrisch gefertigt. Die beiden Konturabschnitte 53.1 und 53.3 gehen über den Konturabschnitt 53.2 zumindest einmal stetig differenzierbar und durchgehend ineinander über.

Zur Montage der Baugruppe gemäß Figur 1 für einen Abgasturbolader wird zunächst das Gegen-Lagerteil 50 in eine entsprechend hergerichtete Aufnahme des Lagergehäuses 60 eingeführt. Um die in Figur 1 gezeigte vorgegebene Position des Gegen-Lagerteils 50 in dem Lagergehäuse 60 zu fixieren ist ein Fixierelement 70 verwendet. Das Fixierelement 70 weist einen Halteabschnitt 72 auf. Dieser Halteabschnitt 72 greift in eine Fixieraufnahme 52 des Gegen-Lagerteils 50 ein. Zur Montage des Fixierelements 70 kann dieses durch einen Schmiermittel-Führungskanal 61 des Lagergehäuses 60 eingeführt werden. Um das Fixierelement 70 unverlierbar zu halten, kann es in dem Lagergehäuse 60 eingeschraubt, eingepresst oder mit einem Halteelement gesichert werden.

Nachdem das Gegen-Lagerteil 50 in dem Lagergehäuse 60 montiert ist, kann der Rotor 10 eingebaut werden. Zu diesem Zweck wird die Rotorwelle 11 von der turbinenseitigen Lagergehäuseseite her in eine Bohrung des Lagergehäuses 60 eingeschoben. Dabei durchgreift die Rotorwelle 11 das Gegen-Lagerteil 50, wie dies Figur 1 zeigt. Die Einschiebe-Bewegung des Rotors 10 wird mit dem Konturabschnitt 17.1 der Rotorwelle 11 begrenzt, welcher an dem zugeordneten Konturabschnitt 53.1 des Gegen-Lagerteils anliegt (siehe Figur 3). In der montierten Position liegen die Dichtelemente, welche in die umlaufenden Dichtungsaufnahme 19 eingesetzt wurden an einer zugeordneten ringförmigen Dichtfläche des Lagergehäuses 60 an (siehe Figur 3).

Von der gegenüberliegenden Seite kann nun das Rotorteil 40 in das Lagergehäuse 60 eingeschoben werden. Dabei wird das Rotorteil 40 mit seinem Lagerbereich 46 voraus auf die Rotorwelle 11 aufgeschoben. Dies gelingt einfach, da das Rotorteil 40 lediglich im Lagerbereich 46 passgenau auf der Rotorwelle 11 geführt ist. Im Übrigen behindert der Rücksprung 47 die Einschub-Bewegung nicht. In der Montagestellung gemäß Figur 2 schlägt das Rotorteil 40 an dem Bund 12 an. Anschließend wird das Verdichterrad 30 auf die Rotorwelle 11 aufgezogen und die Mutter 31 verschraubt (siehe Beschreibung oben). Im montierten Zustand ist der Rotor 10 mit seinen Konturabschnitten 53.1 bis 53.3 an beiden Ansätzen 53 gegenüberliegend den Konturabschnitten 17.1 bis 17.3 bzw. 44.1 bis 44.3 angeordnet. Dabei ist die Zuordnung so getroffen, dass ein Lagerspiel entsteht, in dem jeweils ein hydrodynamischer Film, zur Erzeugung zweier hydrodynamischer Gleitlager, geführt ist. Das relative radiale und das relative axiale Lagerspiel jedes hydrodynamischen Gleitlagers liegt vorzugsweise im Bereich zwischen 1 bis 5 Promille des Durchmessers des Radialkräfte übertragenen Konturabschnitt 17.3 bzw. 44.3.

Wie Figur 1 zeigt ist zwischen einem, vorzugsweise beiden Ansätzen 53 des Gegen-Lagerteils 50 und dem Lagergehäuse 60 ein umlaufender Spaltbereich 57 geschaffen. Dieser Spaltbereich weist ein in radialer Richtung verlaufendes relatives radiales Spiel (absolutes radiales Spiel / Durchmesser des Gegen-Lagerteils 50 im Spaltbereich 57) im Bereich zwischen 5 bis 10 Promille, besonders bevorzugt im Bereich zwischen 7 bis 9 Promille auf.

Der Spaltbereich 57 ist vorzugsweise so angeordnet, dass wenigstens einer der Konturabschnitte 44.1 bis 44.3 bzw. 17.1 bis 17.3 den Spaltbereich 57 in Richtung der Rotationsachse R überdeckt, besonders bevorzugt ist die Überdeckung zumindest im Bereich der Konturabschnitte 17.3 und 44.3 gegeben, die einen wesentlichen Beitrag für die Tragfähigkeit des hydrodynamischen Gleitlagers in radialer Richtung bieten. Die axiale Überdeckung in Richtung der Rotationsachse R zwischen dem Gegen-Lagerteil 50 und dem Lagergehäuse 60 im Spaltbereich 57 ist vorzugsweise so bemessen, dass das Verhältnis der Erstreckung des Spaltbereiches 57 in Richtung der Rotationsachse R zu dem Radialspiel zwischen dem Gegen-Lagerteil 50 und dem Lagergehäuse 60 oder dem Gehäuseteil beträgt:

Axiale Erstreckung des Spaltbereiches 57 in Richtung Rotationsachse R / Radialspiel

= 40 bis 80

Besonders bevorzugt beträgt dieses Verhältnis im Bereich zwischen 45 bis 70.

Mit einer oder mehrerer der vorgenannten Dimensionierungsvorgaben wird im Spaltbereich 57 ein Quetschölfilm geschaffen. Dieser Quetschölfilm weist für die erfindungsgemäßen hydrodynamischen Gleitlager eine hohe axiale Tragfähigkeit für die gängigen Abgasturbolader Anwendungen auf. Ein mit geeigneter Dämpfung ausgelegter Quetschölfilm eignet sich in besonderer Weise zur Reduktion der Lagerkräfte, die insbesondere von Unwucht und Lastwechsel-Vorgängen während des Betriebes herrühren. Auf diese Weise wird zum einen ein besonders geräuscharm arbeitender Abgasturbolader, zum anderen aber auch ein reibleistungsverbesserter Abgasturbolader geschaffen.

Die beiden Spaltbereiche 57 stehen in räumlicher Verbindung mit dem Schmiermittel-Führungskanal 61. Unter Druck stehendes Schmiermittel kann über den Schmiermittel-Führungskanal 61 zugeführt werden. Es gelangt durch einen Kanal 71 des Fixierelements 70 in eine Kammer 64. Von der Kammer 64 wird das Schmiermittel in die Spaltbereiche 57 gedrückt. Auf diese Weise entsteht im ringförmig umlaufenden Spaltbereich 57 die Möglichkeit eine anpassbare Dämpfung durch den Quetschölfilm zu verwirklichen. Von derselben Kammer 64 wird das Schmiermittel auch den beiden hydrodynamischen Gleitlagern zugeführt. Entsprechend gelangt damit das Schmiermittel in den Bereich des hydrodynamischen Spaltes, welcher zwischen den Konturabschnitten 44.1 bis 44.3 des Rotors 10 und den zugeordneten Konturabschnitten 53.1 bis 53.3 des Gegen-Lagerteils einerseits und den Konturabschnitten 17.1 bis 17.3 sowie den zugeordneten Konturabschnitten 53.1 bis 53.3 andererseits gebildet ist. Während der Rotation des Rotors 10 wird das Schmiermittel über den hydrodynamischen Spalt der hydrodynamischen Gleitlager zur hydrodynamischen Druckerzeugung geleitet. Im Anschluss an den hydrodynamischen Spalt gelangt das Schmiermittel in einen Schleuderraum 62. In diesen Schleuderraum 62 können beispielsweise auch die Spaltbereiche 57 münden. Das Schmiermittel wird in einem Sammelbereich 63 des Lagergehäuses 60 gesammelt, dem Schmiermittelkreislauf zurückgeführt und wieder dem Schmiermittel-Führungskanal 61 zugeleitet.

Gemäß Figur 2 ist, wie dies vorstehend erwähnt wurde das Rotorteil 40 im Bereich eines Stützabschnitts 14 der Rotorwelle 11 gegenüber der Rotorwelle 11 abgestützt. Hier ist die Zuordnung so getroffen, dass der Stützabschnitt 14 und zumindest einer der Konturabschnitte 53.1 bis 53.3 des Gegen-Lagerteils 50 in Richtung der Rotationsachse R sich zumindest bereichsweise überdecken. Die Überdeckung liegt vorzugsweise im Bereich der Konturabschnitte 17.3 bzw. 44.3 vor.

## Patentansprüche

1. Abgasturbolader mit einem hydrodynamischen Gleitlager oder hydrodynamisches Gleitlager, mit einem Rotor (10) und einem dem Rotor (10) zugeordneten Gegen-Lagerteil (50),

   wobei sich eine Rotor-Lagerfläche (17.1, 17.2, 17,3) des Rotors (10) und eine Gegenfläche des Gegen-Lagerteils (50) gegenüberstehen, um ein hydrodynamisches Gleitlager zu bilden,
   wobei die Rotor-Lagerfläche und/oder die Gegenfläche bei einem Schnitt längs und durch die Rotationsachse (R) in Schnittansicht eine durchgehende Lagerkontur bildet/bilden, die wenigstens zwei ineinander übergehende Konturabschnitte (44.1 bis 44.3; 53.1 bis 53.3) bilden, um hydrodynamische Tragfähigkeiten sowohl in radialer als auch in axialer Richtung zu erzeugen, und wobei das Gegen-Lagerteil (50) in ein Lagergehäuse (60) oder ein Gehäuseteil eingebaut ist,
   **dadurch gekennzeichnet,**
   **dass** zwischen einer Außenkontur des Gegen-Lagerteils (50) und dem Lagergehäuse (60) oder dem Gehäuseteil ein, vorzugsweise umlaufender Spaltbereich (57) zur Bildung eines Quetschölfilms gebildet ist, wobei der Spaltbereich (57) mit einem Schmiermittel-Führungskanal (61) in räumlicher Verbindung steht, und dass sich der Spaltbereich (57) und die durchgehende Lagerkontur des Rotors (10) und/oder des Gegen Lagerteils (50) in Richtung der Rotationsachse (R) zumindest bereichsweise überdecken.

2. Abgasturbolader oder hydrodynamisches Gleitlager nach Anspruch 1, **dadurch gekennzeichnet, dass** das radiale Spiel zwischen dem Gegen-Lagerteil (50) und dem Lagergehäuse (60) oder dem Gehäuseteil größer ist als das radiale Spiel zwischen dem Rotorteil (40), beziehungsweise der RotorLagerfläche (17.1, 17.2, 17,3) des Rotors, und dem Gegen-Lagerteil (50).

3. Abgasturbolader oder hydrodynamisches Gleitlager nach Anspruch 1 oder 2, **dadurch gekennzeichnet, dass** zwischen dem Gegen-Lagerteil (50) und dem Lagergehäuse (60) oder dem Gehäuseteil im Spaltbereich (57) ein in radialer Richtung verlaufendes, auf den äußeren Durchmesser des Spaltbereichs (57) bezogenes relatives Spiel im Bereich zwischen 5 bis 10 Promille , besonders bevorzugt im Bereich zwischen 7 bis 9 Promille, gebildet ist oder dass das radiale Spiel zwischen dem Gegen-Lagerteil (50) und dem Lagergehäuse (60) oder dem Gehäuseteil 3 mal bis 5 mal größer ist als das radiale Spiel zwischen dem Rotorteil (40) bzw. der Rotorlagerfläche (17.1, 17.2, 70.3) des Rotors (10) und dem Gegen-Lagerteil (50).

4. Abgasturbolader oder hydrodynamisches Gleitlager nach einem der Ansprüche 1 bis 3,
   **dadurch gekennzeichnet, dass** die axiale Überdeckung in Richtung der Rotationsachse (R) zwischen dem Gegen-Lagerteil (50) und dem Lagergehäuse (60) oder dem Gehäuseteil im Spaltbereich (57) zur Bildung eines Quetschölfilms derart bemessen ist, dass das Verhältnis der Erstreckung des Spaltbereiches (57) in Richtung der Rotationsachse zu dem Radialspiel zwischen dem Gegen-Lagerteil (50) und dem Lagergehäuse (60) oder dem Gehäuseteil beträgt:

# Axiale Erstreckung des Spaltbereiches (57) / Radialspiel = 40 bis 80,

wobei dieses Verhältnis besonders bevorzugt im Bereich zwischen 45 bis 70 gewählt ist.

5. Abgasturbolader oder hydrodynamisches Gleitlager nach einem der Ansprüche 1 bis 4, **dadurch gekennzeichnet,**

   **dass** das Rotorteil (40) im Bereich eines Stützabschnitts (14) der Rotorwelle (11) gegenüber der Rotorwelle (11) abgestützt ist,
   und **dass** sich vorzugsweise der Stützabschnitt (14) und zumindest einer der Konturabschnitte (53.1 bis 53.3) des Gegen-Lagerteils (50) in Richtung der Rotationsachse (R) zumindest bereichsweise überdecken.

6. Abgasturbolader oder hydrodynamisches Gleitlager nach Anspruch 5, **dadurch gekennzeichnet,**
   **dass** das Rotorteil (40) einen Lagerbereich (46) aufweist, der die Konturabschnitte (44.1 bis 44.3) bildet, und dass der Lagerbereich (46) so angeordnet ist, dass wenigstens einer dieser Konturabschnitte (44.1 bis 44.3) in Richtung der Rotationsachse (R) den Stützabschnitt (14) zumindest bereichsweise überdeckt.

7. Abgasturbolader oder hydrodynamisches Gleitlager nach einem der Ansprüche 1 bis 6,
   **dadurch gekennzeichnet, dass** das radiale Spiel zwischen dem Stützabschnitt (14) der Rotorwelle (11) und dem am Stützabschnitt (14) anliegenden Bereich des Rotorteils (40) kleiner ist, als das radiale Spiel zwischen dem Rotorteil (40) und dem Gegen-Lagerteil (50).

8. Abgasturbolader oder hydrodynamisches Gleitlager nach einem der Ansprüche 1 bis 7,
   **dadurch gekennzeichnet, dass** zwischen dem Stützabschnitt (14) der Rotorwelle (11) und dem am Stützabschnitt (14) anliegenden Bereich des Rotorteils (40) ein Passsitzes in Form einer Übergangspassung gebildet ist, und dass das auf den Durchmesser des Stützabschnitts (14) bezogene relative radiale Lagerspiel des hydrodynamischen Gleitlagers im Bereich zwischen -6 bis +6 Promille beträgt.

9. Abgasturbolader oder hydrodynamisches Gleitlager nach einem der Ansprüche 1 bis 8,
   **dadurch gekennzeichnet, dass** das radiale Spiegel zwischen dem Gegen-Lagerteil (50) und dem Lagergehäuse (60) oder dem Gehäuseteil und die axiale Erstreckung des Spaltbereichs (57) definiert durch die Beziehung:
   Axiale Erstreckung des Spaltbereichs (57) in Millimeter gleich 9 minus C mal radiales Spiel zwischen dem Gegen-Lagerteil (50) und dem Lagergehäuse (60) in Millimetern, wobei C im Bereich 61 bis 75 liegt, besonders bevorzugt im Bereich zwischen 66 bis 70 liegt.

10. Abgasturbolader oder hydrodynamisches Gleitlager nach einem der Ansprüche 5 bis 9,
    **dadurch gekennzeichnet, dass** sich der Spaltbereich (57) und der Stützabschnitt (14) in Richtung der Rotationsachse (R) zumindest bereichsweise überdecken.

11. Abgasturbolader oder hydrodynamisches Gleitlager nach einem der Ansprüche 1 bis 9,
    **dadurch gekennzeichnet, dass** das Rotorteil (40) ein Basisteil (41) aufweist, das mit zumindest einer Dichtungsaufnahme (42) versehen ist, in die ein Dichtelement (43) eingelegt ist.

12. Abgasturbolader oder hydrodynamisches Gleitlager nach einem der Ansprüche 1 bis 10,
    **dadurch gekennzeichnet, dass** das Rotorteil (40) einen Ansatz (45) mit einer Anschlagfläche aufweist, und dass die Anschlagfläche an einer radial verlaufenden Fläche eines Bunds (12) der Rotorwelle (11) flächig anschlägt.

13. Abgasturbolader oder hydrodynamisches Gleitlager nach einem der Ansprüche 1 bis 11,
    **dadurch gekennzeichnet,**
    **dass** das Rotorteil (40) zwischen einem Verdichterrad (30) und dem Bund (12) vorzugsweise unter Einwirkung einer Schraubverbindung, verspannt ist, sodass es axial und in Umfangsrichtung unverdrehbar gesichert ist.

14. Abgasturbolader oder hydrodynamisches Gleitlager nach einem der Ansprüche 1 bis 12,
    **dadurch gekennzeichnet, dass** die durchgehende und aus den Konturabschnitten (44.1 bis 44.3; 53.1 bis 53.3) gebildete Lagerkontur der Rotor-Lagerfläche und/oder der Gegenfläche bei einem Schnitt längs und durch die Rotationsachse (R) in Schnittansicht mindestens einmal stetig differenzierbar ausgebildet ist.

**15.** Abgasturbolader oder hydrodynamisches Gleitlager nach einem der Ansprüche 5 bis 13,
**dadurch gekennzeichnet, dass** zwischen der Rotorwelle (11) und dem Rotorteil (40) in Richtung der Rotationsachse (R) mittelbar oder unmittelbar neben dem Stützabschnitt (14) ein, vorzugsweise ringförmiger Abstandsraum gebildet ist, der vorzugsweise von einer Durchmesservergrößerung im Rotorteil (40) gebildet ist, die sich an den Lagerbereich (46) des Rotorteils (40) anschließt.

**16.** Lageranordnung mit einem hydrodynamischen Gleitlager nach einem der Ansprüche 1 bis 14.

Fig. 1

Fig. 2

Fig. 3

Europäisches
Patentamt

European
Patent Office

Office européen
des brevets

# EUROPÄISCHER RECHERCHENBERICHT

**Nummer der Anmeldung**

EP 22 19 0386

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 2016/146189 A1 (BOSCH MAHLE TURBO SYSTEMS GMBH & CO KG [DE]; BERGER MARTIN [DE]) 22. September 2016 (2016-09-22) | 1-3,5-8, 10-14,16 | INV. F16C17/10 F01D25/16 |
| A | * Seite 5, Zeilen 9-12 * * Seite 11, Zeile 13 – Seite 13, Zeile 22 * * Seite 18, Zeilen 4-20, 27-28 * * Abbildungen 3, 5, 6, 8-10, 15 * ----- | 4,9,15 | ADD. F16C27/02 |
| Y | US 2017/159708 A1 (UNEURA YUTAKA [JP] ET AL) 8. Juni 2017 (2017-06-08) * Absätze [0024], [0029], [0035] * * Abbildung 2 * ----- | 1-3,5-8, 10-14,16 | |
| A,D | EP 1 972 759 B1 (HONEYWELL INT INC [US]) 9. Dezember 2015 (2015-12-09) * Abbildung 2 * ----- | 1,12,13 | |

|  | RECHERCHIERTE SACHGEBIETE (IPC) |
|---|---|
|  | F16C F01D |

Der vorliegende Recherchenbericht wurde für alle Patentansprüche erstellt

| Recherchenort | Abschlußdatum der Recherche | Prüfer |
|---|---|---|
| Den Haag | 28. Oktober 2022 | Dumont, Marie-Laure |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 22 19 0386

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-10-2022

| Im Recherchenbericht angeführtes Patentdokument | Datum der Veröffentlichung | Mitglied(er) der Patentfamilie | Datum der Veröffentlichung |
|---|---|---|---|
| WO 2016146189 A1 | 22-09-2016 | CN 107429735 A | 01-12-2017 |
| | | CN 110242665 A | 17-09-2019 |
| | | EP 3271597 A1 | 24-01-2018 |
| | | EP 3421825 A1 | 02-01-2019 |
| | | KR 20180011054 A | 31-01-2018 |
| | | US 2018023620 A1 | 25-01-2018 |
| | | US 2020256380 A1 | 13-08-2020 |
| | | WO 2016146189 A1 | 22-09-2016 |
| US 2017159708 A1 | 08-06-2017 | CN 107076210 A | 18-08-2017 |
| | | DE 112015004493 T5 | 29-06-2017 |
| | | JP 6327354 B2 | 23-05-2018 |
| | | JP WO2016052182 A1 | 15-06-2017 |
| | | US 2017159708 A1 | 08-06-2017 |
| | | WO 2016052182 A1 | 07-04-2016 |
| EP 1972759 B1 | 09-12-2015 | EP 1972759 A2 | 24-09-2008 |
| | | US 2008232729 A1 | 25-09-2008 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008059598 A1
- WO 2014105377 A1
- EP 1972759 B1
- DE 202016105071 U1